# EUROPÄISCHE PATENTSCHRIFT

(11) **EP 2 729 295 B1**
(45) Veröffentlichungstag und Bekanntmachung des Hinweises auf die Patenterteilung: **07.08.2019**
(21) Anmeldenummer: 12726426.5
(22) Anmeldetag: 06.06.2012
(51) Int. Cl.: B29C 65/48, B29C 65/78, F03D 1/06, F03D 13/10, B29C 65/02, B29L 31/08, B29C 65/52

(54) **VERKLEBEEINRICHTUNG ZUM BAU VON SEGMENTIERTEN ROTORBLÄTTERN**
ADHESIVE DEVICE FOR CONSTRUCTING SEGMENTED ROTOR BLADES
DISPOSITIF DE COLLAGE POUR LA CONSTRUCTION DE PALES DE ROTOR SEGMENTÉES

(30) Priorität: 07.07.2011 DE 102011078804
(43) Veröffentlichungstag der Anmeldung: 14.05.2014
(73) Patentinhaber: Carbon Rotec GmbH & Co. KG, 27809 Lemwerder (DE)
(72) Erfinder: DÄNEKAS, Kai, 27809 Lemwerder (DE); WEIGEL, Lars, 26215 Wiefelstede (DE); DREWES, Marcus, 27809 Lemwerder (DE)
(74) Vertreter: Heiland, Karsten
(86) Internationale Anmeldenummer: PCT/EP2012/060667
(87) Internationale Veröffentlichungsnummer: WO 2013/004445

(56) Entgegenhaltungen:
- EP-A2- 1 965 074
- WO-A2-2009/109619
- WO-A2-2009/130467
- WO-A2-2011/006563

## Beschreibung

Die vorliegende Erfindung betrifft eine Verklebeeinrichtung zum Bau von segmentierten, mindestens drei vorgefertigte Rotorblattteile, nämlich Nasenschale, Mittelteilsegment und Hinterkantensegment, umfassenden Rotorblättern und ein Verfahren zu deren Herstellung.

Rotorblätter für Windkraftanlagen werden meist aus einem Laminat aus Glasfaserwerkstoffen und Harzen gefertigt, wobei typischerweise eine Anzahl an flächigen Glasfaserstrukturen mit einem geeigneten Harz infusioniert werden, um einen Verbundwerkstoff mit der Geometrie eines Rotorblattes herzustellen. Um die großmassigen Rotorblätter herzustellen, werden die Glasfaserstrukturen zunächst in geeignete Formen eingelegt und darin mit dem Harz behandelt. Nach einer Wärmebehandlung wird das Harz ausgehärtet und die gesamte Struktur ausgehärtet.

Ein Rotorblatt besteht hierbei aus einer Anzahl an verschiedenen Bauteilen, welche alle miteinander verlaminiert bzw. verklebt werden müssen, um die Gesamtstruktur eines Rotorblattes zu realisieren. So umfassen Rotorblätter neben den äußerlich sichtbaren Rotorblattschalen in ihrem Inneren weiterhin noch lastaufnehmende Gurte und Stege, welche mit den Innenflächen der Rotorblattschalen direkt oder indirekt verklebt werden.

Um die Gesamtstruktur eines Rotorblattes herzustellen, werden die einzelnen Bauteile miteinander verklebt bzw. verlaminiert. Hierbei werden typischerweise mit den Gurten und Stegen bereits versehene Rotorblatthalbschalen (Druckseite und Saugseite) aufeinander aufgebracht, verklebt und nach dem Aushärten des Klebers das Rotorblatt fertig gestellt.

Das Herstellungsverfahren, welches typischerweise auf einer 2-Formschalentechnologie basiert, weist jedoch Grenzen auf hinsichtlich der darstellbaren Geometrien des Rotorblattes. So erschweren etwa Hinterschnitte und tordierte Blattgeometrien nicht nur das Aufeinanderaufbringen der Rotorblatthalbschalen, sondern auch eine halt- und belastbare Verklebung dieser Stellen wird mit zunehmender Komplexität der Geometrie deutlich erschwert.

Dieser Umstand gestaltet sich insbesondere als Nachteil beim Bau neuartiger Rotorblattgeometrien, die sich durch eine verstärkte schraubenförmige d. h. tordierte Geometrie auszeichnen. Ferner weisen viele neuartige Blattgeometrien, vor allem im Offshore-Windenergiebereich, solche Rotorblätter mit komplizierten Hinterschnitten und relativ starken Torsionen auf.

Die WO 2011/006563 A2 offenbart ein Verfahren zum Fertigen eines Rotorblattes mittels einer Fertigungsform, welche zwei Flügelvorrichtungen aufweist. Jede der Flügelvorrichtungen weist zwei Schwenkteile auf. Auf jedes der vier Schwenkteile ist ein Schalensegment des Rotorblattes ablegbar. Das Verfahren läuft in wenigstens zwei Schritten ab. In einem ersten Schritt werden die Schalensegmente der Profilvorderkante miteinander verbunden, ebenso die Schalensegmente der Profilhinterkante. In einem zweiten Schritt werden Nasenkasten und Endkasten miteinander verbunden.

In der WO 2009/109619 A2 ist ein Rotorblatt beschrieben, welches (im Querschnitt gesehen) aus mindestens fünf Rotorblattteilen besteht, nämlich einem Mittelkasten, einem Nasenbereich, Profilober- und -unterseiten und einer Profilhinterkante. Die genannten Teile sind in eine Form eingelegt und durch (wiederum im Querschnitt gesehen) endseitige Haltebügel festgeklemmt.

Die EP 1 965 074 A2 offenbart ein Rotorblatt aus drei Komponenten, nämlich einem Mittelteil, einer Vorderkante und einer Hinterkante. Eine Verklebeeinrichtung ist nicht ersichtlich, ein Verklebeverfahren ebenfalls nicht. Am Rotorblatt sind keine Verklebebereiche ersichtlich.

Die WO 2009/130467 A2 offenbart ein Rotorblatt, welches aus sehr vielen einzelnen Segmenten zusammengesetzt ist, unter anderem aus vielen in Längsrichtung aufeinanderfolgenden Segmenten.

Demnach stellt es sich als eine technische Notwendigkeit dar, eine Verklebeeinrichtung vorzuschlagen, welche erlaubt, die Nachteile aus dem Stand der Technik beim Bau von Rotorblättern zu vermeiden. Insbesondere sollte die Verklebeeinrichtung auch erlauben, Rotorblattgeometrien zu verwirklichen, die im Vergleich zu herkömmlichen Blattgeometrien stärkere Torsionen und Hinterschnitte aufweisen. Zudem sollte die Verklebeeinrichtung geeignet sein, die Herstellungszeiten für ein Rotorblatt zu vermindern. Eine teilautomatisierte oder sogar vollautomatisierte Herstellung von Rotorblättern sollte ebenfalls ermöglicht werden. Weiterhin ist es Aufgabe der vorliegenden Erfindung, ein Verfahren zur Herstellung eines Rotorblatts vorzuschlagen.

Diese Aufgaben werden gelöst durch eine Verklebeeinrichtung entsprechend Patentanspruch 1. Insbesondere werden diese Aufgaben gelöst durch eine Verklebeeinrichtung zum Bau von segmentierten, mindestens drei vorgefertigte Rotorblattteile, nämlich Nasenschale, Mittelteilsegment und Hinterkantensegment, umfassenden Rotorblättern, aufweisend: einen ersten Aufnahmebereich für die Aufnahme der vorgefertigten Nasenschale, einen zweiten Aufnahmebereich für die Aufnahme des vorgefertigten Mittelteilsegments und einen dritten Aufnahmebereich für die Aufnahme des vorgefertigten Hinterkantensegments, wobei der erste Aufnahmebereich, der zweite Aufnahmebereich und der dritte Aufnahmebereich so relativ zueinander bewegt werden können, dass nach erfolgter Aufnahme der drei vorgefertigten Rotorblattteile in den bestimmungsgemäßen Aufnahmebereichen in einer Offen-Position der Verklebeeinrichtung diese Rotorblattteile über vorbestimmte Verklebebereiche miteinander in direkten oder indirekten Kontakt gebracht und damit in eine Verklebeposition überführt werden können. Erfindungsgemäß ist zwischen einer ersten Haltestruktur für den ersten Aufnahmebereich und einer dritten Haltestruktur für den dritten Aufnahmebereich eine zweite Haltestruktur für den zweiten Aufnahmebereich vorgesehen, wobei die erste Haltestruktur mit dem ersten Aufnahmebereich und der Nasenschale sowie die dritte Haltestruktur mit dem dritten Aufnahmebereich und dem Hinterkantensegment auf das im zweiten Aufnahmebereich aufgenommene Mittelteilsegment zu bewegbar sind, während der zweite Aufnahmebereich mit dem Mittelteilsegment im Raum unbewegt bleibt.

Rotorblatteile sind hier auch im Sinne von Rotorblattsegmenten zu verstehen.

Weiter soll eine Vorfertigung eines Rotorblattteils bereits eine Härtung, d. h. eine Teilhärtung und/oder eine vollständige Aushärtung umfassen. Insbesondere weisen die so vorgefertigten Rotorblattteile einen Glasübergangswert Tg von 50°C auf, was einer Vernetzung von etwa 90% entspricht. Ein weitgehend vollständig ausgehärtetes Rotorblattteil weist hierbei im Gegensatz einen Glasübergangswert Tg von etwa 65°C auf. Die Messung des Glasübergangswertes erfolgt typischerweise mit der Dynamisch Mechanischen Analyse (DMA) oder der dynamischen Differenzkalorimetrie (DSC).

Weiter zeichnet sich die Verklebeposition dadurch aus, dass sie eine Position darstellt, welche geeignet ist, die Rotorblattteile miteinander zu verkleben. Hierbei kann die Verklebeposition mit einer Schließposition der Verklebeeinrichtung übereinstimmen oder aber auch eine Position sein, welche nicht mit einer Schließposition der Verklebeeinrichtung übereinstimmt, jedoch mit einer Position, die für eine Verklebung geeignet ist.

Gemäß einer besonders bevorzugten Ausführungsform sind die Rotorblatteile Bauteile, welche von außen an dem fertig gestellten Rotorblatt zugänglich sind, d. h. sie weisen wenigstens bereichsweise einen Außenhautabschnitt auf. Insbesondere sind die Rotorblattteile nicht nur Gute oder Stege, wohingegen Gute und/oder Stege von den Rotorblattteilen mit umfasst sein können.

Ferner sind die Verklebebereiche am Rotorblatt von außen wenigstens bereichsweise nach dessen Herstellung sichtbar, d. h. wenigstens eine Verklebungsnaht ist von außen sichtbar. Insbesondere betreffen die Verklebebereiche nicht Verklebungen der Bauteile, beispielsweise wie Gurt oder Steg, welche nach Fertigstellung des Rotorblatts von außen nicht mehr sichtbar oder zugänglich sind.

Ferner werden die Erfindungsaufgaben durch ein Verfahren zum Verkleben nach Patentanspruch 12 gelöst. Insbesondere werden die Aufgaben durch ein Verfahren zum Verkleben von mindestens drei vorgefertigten Rotorblattteilen, nämlich Nasenschale, Mittelteilsegment und Hinterkantensegment, zum Bau eines segmentierten Rotorblattes gelöst, wobei die Rotorblatteile mit Hilfe einer Verklebeeinrichtung derart verklebt werden, dass alle drei Rotorblattteile von der Verklebeeinrichtung aufgenommen und über vorbestimmte Verklebebereiche mit einem anderen Rotorblattteil in direktem oder indirektem Kontakt zum Verkleben in eine Verklebeposition überführt werden. Erfindungsgemäß werden eine erste Haltestruktur mit einem ersten Aufnahmebereich und der Nasenschale sowie eine dritte Haltestruktur mit einem dritten Aufnahmebereich und dem Hinterkantensegment auf das Mittelteilsegment zu bewegt, während ein zweiter Arbeitsbereich mit dem Mittelteilsegment im Raum unbewegt bleibt.

Eine derartige Verklebeeinrichtung sowie das entsprechende Herstellungsverfahren solcher Rotorblätter erlaubt eine Vielzahl an vorgefertigten Rotorblattteilen in geeigneter Weise miteinander zu verkleben, um eine Rotorblattgeometrie zu realisieren, die sich durch sonst derzeit nicht herzustellende Torsionen und Hinterschnitte auszeichnet. Indem nämlich die Rotorblattteile nicht nur aus zwei Halbschalen hergestellt werden, können die einzelnen Rotorblattteile mit einer derartigen Geometrie vorgefertigt werden, dass das zeitlich nachfolgende Fügen und Verkleben der einzelnen Rotorblattteile deutlich erleichtert ist. Demnach können auch die Rotorblattteile, welche eine verstärkte Torsion oder eine Hinterschnitt aufweisen, vorgefertigt werden, ohne dass sie bereits mit einem anderen Rotorblattteil verbunden sind.

Erfindungsgemäß erlaubt das Herstellungsverfahren bzw. die Verklebeeinrichtung, sich von der bisherigen 2-Halbschalenfertigung zu lösen und ermöglicht damit eine Herstellung von Rotorblättern mit komplexen Geometrien.

Ein solches erfindungsgemäßes Herstellungsverfahren sowie Verklebeeinrichtung erlauben also die Herstellung sog. Multisegmentblätter, die sich zudem durch größere Dimensionen als herkömmliche, bisher aus dem Stand der Technik bekannte Rotorblätter sowie durch eine größere Anzahl an möglichen geometrischen Ausgestaltungen auszeichnen. Aufgrund der erfindungsgemäßen Verklebeeinrichtung wird zudem der Arbeitsaufwand beim Verkleben solcher Rotorblätter vermindert, so dass eine beschleunigte Herstellung von dem Zeitpunkt der Verklebung bis zum Zeitpunkt der Fertigstellung des Rotorblattes resultieren kann. Zudem erlaubt die Verklebeeinrichtung auch eine geeignete Bauteilpositionierung, um auch komplexere Rotorblattgeometrien realisieren zu können. Weiterhin wird der der Herstellung zeitlich vorgelagerte logistische Arbeitsaufwand vermindert, indem nämlich hinsichtlich ihrer Dimensionen relativ kleinere Rotorblattteile zu transportieren sind.

Entsprechend einer ersten besonders bevorzugten Ausführungsform der Verklebeeinrichtung ist vorgesehen, dass die Verklebeeinrichtung wenigstens einen weiteren vierten Aufnahmebereich aufweist, welcher zur Aufnahme bzw. zur Halterung eines Flansches ausgebildet ist, der insbesondere mit mindestens einem der drei vorgefertigten Rotorblattteilen über einen vorbestimmten Verklebebereich verklebt werden kann. Damit ist gewährleistet, dass ausführungsgemäß ein gesamtes Rotorblatt mit Flansch zum Anschluss an eine Nabe einer Windkraftanlage hergestellt werden kann. Zudem gewährleistet der vierte Aufnahmebereich eine kontrollierte Manipulation des Flansches, um eine gewünschte Ausrichtung und exakte relative Positionierung der Rotorblattteile zum Flansch zu erreichen. Zudem kann eine separate Aufnahme des Flansches in einem Bereich, welcher nicht zur Aufnahme anderer relativ leichterer Rotorblatteile vorgesehen ist, eine verbesserte Gewichtsverteilung erreichen, wodurch der technische Gesamtaufwand für die Verklebeeinrichtung vermindert werden kann.

Entsprechend einer weiteren Ausführungsform der erfindungsgemäßen Verklebeeinrichtung kann vorgesehen sein, dass die Überführung der in den drei Aufnahmebereichen angeordneten, vorgefertigten Rotorblattteile in die Verklebeposition automatisch, und/oder weggesteuert erfolgt. Dies ermöglicht einerseits eine zeitlich schnellere Herstellung eines fertigen Rotorblatts, zudem kann damit eine Serienfertigung für relativ große Durchlaufmengen erreicht werden. Eine Wegsteuerung ermöglicht zudem noch die Genauigkeit und Exaktheit, mit welcher die Rotorblatteile miteinander verklebt sind, zu erhöhen. Weiterhin ist die Positionier- und Widerholgenauigkeit deutlich verbessert.

Weiterhin kann ausführungsgemäß vorgesehen sein, dass der erste Aufnahmebereich, der zweite Aufnahmebereich und der dritte Aufnahmebereich bei der Überführung der in den drei Aufnahmebereichen angeordneten, vorgefertigten Rotorblattteile in die Verklebeposition derart bewegt werden können, dass die vorgefertigten Rotorblattteilen im Wesentlichen gleichzeitig, insbesondere aber nicht mit einem größeren Zeitversatz als 30 min miteinander zum Verkleben in direkten oder indirekten Kontakt gebracht werden können. Demnach ist wiederum eine relativ schnellere Herstellung eines fertigen Rotorblatts ermöglicht und die Grundlage einer Serienproduktion gewährleistet. Insbesondere ist damit auch die Realisierung eines 12-Stunden-Takes bei der Herstellung der Rotorblätter möglich, da ein zeitlich unmittelbar aufeinander folgendes Zusammenfügen der Rotorblattteile Zeit für die Fertigstellung eines Rotorblattes verringert.

Entsprechend einer weiteren Ausführungsform der erfindungsgemäßen Verklebeeinrichtung ist vorgesehen, dass wenigstens einer der vier Aufnahmebereiche bei der Überführung der in den vier Aufnahmebereichen angeordneten, vorgefertigten Rotorblattteile in die Verklebeposition relativ zu einem der anderen Aufnahmebereiche verkippt werden kann. Damit sind bisher nicht herstellbare Hinterschnitte realisierbar, welche noch komplexere Blattgeometrien zu bauen erlauben. Insbesondere sind die Anstellwinkel bei der Verkippung individuell einstellbar.

Entsprechend einer weiteren Ausführungsform der Erfindung ist vorgesehen, dass der erste Aufnahmebereich, der zweite Aufnahmebereich und der dritte Aufnahmebereich bei der Überführung der in den drei Aufnahmebereichen angeordneten, vorgefertigten Rotorblattteile in die Verklebeposition eine in Bezug zum Verlauf des Erbeschleunigungsfeldes senkrechte Bewegung relativ zueinander ausführen. Die Relativbewegung erfolgt also im Wesentlichen horizontal, wobei die drei Rotorblatteile aufgrund dieser Horizontalbewegung so zueinander und in eine Verklebeposition bewegt werden, dass die zu verklebenden Rotorblattteile vor, während und auch nach dem Bewegen in die Verklebeposition leicht von Bedienungspersonal überwacht und kontrolliert werden können. Zudem erfordert eine Horizontalbewegung relativ weniger Kraft- und damit Energieaufwand, als eine Bewegung, die eine Vertikalbewegungskomponente aufweist. Dies gewährleistet somit einen im Wesentlichen geringen Energieverbrauch als andere Bewegungsorientierungen. Alternativ kann die Bewegung auch parallel zueinander erfolgen, wobei sich hierbei entsprechende Nachteile ergeben.

Entsprechend einer weiteren möglichen Ausführungsform ist vorgesehen, dass der in dem vierten Aufnahmebereich angeordnete bzw. gehalterte Flansch bei der Überführung der in den ersten, zweiten und dritten Aufnahmebereichen angeordneten, vorgefertigten Rotorblattteile in die Verklebeposition ortsfest und unbewegt bleibt. Dies ermöglicht einerseits eine genauere relative Positionierung des Flansches relativ zu den Rotorblatteilen, da eine Bewegung des relativ schwereren Flanschbereichs vermieden werden kann. Zudem wird dadurch auch das Gesamtfertigungsverfahren vereinfacht, da nur die Bewegungen und damit die relative Positionierung der Rotorblatteile in Bezug auf ein festes Bezugssystem (nämlich das des Flansches) berücksichtigt werden müssen. Der Flansch ist typischerweise zudem noch in seiner Position vorjustiert, so dass eine Anordnung aller Rotorblatteile relativ zu dem Flansch die Gesamtausrichtung und genaue Anordnung der Rotorblatteile zueinander erleichtert. Diese Vorteile lassen sich auch in Bezug auf eine alternative Ausführungsform feststellen, bei welcher der Flansch mit einem der wenigstens drei Rotorblattteile bereits fest verbunden ist.

Entsprechend einer weiteren bevorzugten Ausführungsform kann auch vorgesehen sein, dass der erste Aufnahmebereich, der zweite Aufnahmebereich und der dritte Aufnahmebereich derart zueinander angeordnet sind, dass das zu bauende segmentierte Rotorblatt nach der Überführung der in den drei Aufnahmebereichen angeordneten, vorgefertigten Rotorblattteile in die Verklebeposition entweder mit seiner Saugseite oder mit seiner Druckseite im Wesentlichen parallel zum Verlauf der Erdoberfläche orientiert ist, auf welcher insbesondere die Verklebeeinrichtung aufgestellt ist. Damit ist eine optisch unterstützte Justierung der einzelnen Rotorblattteile erleichtert. Zudem können die einzelnen Rotorblattteile geeignet gegen den Boden abgestützt werden, ohne Beschädigungen an den Rotorblattteilen oder eine Veränderung ihrer relativen Ausrichtung befürchten zu müssen.

Entsprechend einer weiteren Ausführungsform der Verklebeeinrichtung kann auch vorgesehen sein, dass wenigstens einer der drei Aufnahmebereiche schwenkbar, insbesondere um wenigstens 90° schwenkbar ausgeführt ist. Damit können etwa Verklebebereiche der einzelnen Rotorblattteile für das Bedienpersonal zugänglich gemacht werden, welche andererseits nur schwer zu erreichen wären. So können etwa bestimmte Rotorblatteile für den erforderlichen Kleberauftrag in ihrer Position verändert werden, und anschließend zum Verkleben mit weiteren Rotorblattteilen wieder in eine Ausrichtung überführt werden. Nicht nur zum Kleberauftrag kann jedoch eine Verschwenkung erfolgen, sondern auch etwa zum Befüllen der Aufnahmen der Verklebeeinrichtung mit den entsprechenden vorgefertigten Rotorblattteilen. Hierbei erweist es sich als besonders vorteilhaft, wenn eine Schwenkposition eine der Aufnahmen nach oben, entgegen der Richtung der Schwerkraft, frei gibt.

Entsprechend einer weiteren Ausführungsform kann vorgesehen sein, dass wenigstens einer der Aufnahmebereiche an eine geometrische Form des bestimmungsgemäß zur Aufnahme vorgesehenen, vorgefertigten Rotorblattteils bzw. Flansches anpassbar ist. Damit ist es möglich, die Verklebeeinrichtung auch für die Herstellung von Rotorblättern zu verwenden, die eine abweichende Geometrie aufweisen. Insbesondere sind die jeweiligen Aufnahmen für die Aufnahme der Rotorblattteil mit Einsätzen versehen, welche sich der Geometrie des Rotorblattteils anpasst bzw. dieser entspricht. Soll nun die Geometrie des Rotorblattes verändert werden, ist es lediglich erforderlich, diese Einsätze auszutauschen, um Aufnahmen bereitstellen zu können, welche auch der neuen Geometrie entsprechen. Alternativ können auch die Einsätze durch geeignet angebrachte Aktuatoren entsprechend verformt und damit angepasst werden. Folglich wird ausführungsgemäß die Benutzungsvielseitigkeit der Verklebeeinrichtung erhöht.

Entsprechend einer weiteren Ausführungsform der erfindungsgemäßen Verklebeeinrichtung ist auch vorgesehen, dass der erste Aufnahmebereich für die Aufnahme einer vorgefertigten Nasenschale und/oder der zweite Aufnahmebereich für die Aufnahme eines vorgefertigten Mittelteilsegments und/oder der dritte Aufnahmebereich für die Aufnahme eines vorgefertigten Hinterkantensegments des zu bauenden Rotorblatts vorgesehen ist. Diese Rotorblattteile sind insbesondere so miteinander verklebt, dass ihre Verklebebereiche größtenteils in Längsrichtung des herzustellenden Rotorblatts angeordnet sind bzw. verlaufen. Zudem weist der Bereich des Rotorblatts, welcher als Nasenbereich bezeichnet wird, eine mitunter verstärkte Krümmung und Torsion auf. Dies ist insbesondere auch für den Bereich zutreffend, welcher als Hinterkante des Rotorblattes bezeichnet wird. Um folglich Probleme bei der Herstellung und dem nachfolgenden Fügen zu verringern bzw. auszuschließen, werden Rotorblattteile, welche diese bereiche umfassen, vorgefertigt und nachfolgend nur noch in geeigneter Weise verklebt. Die Verklebung kann hierbei in Verklebebereichen erfolgen, welche für eine feste Klebeverbindung besser geeignet sind, als die mitunter gekrümmten Bereiche in dem Nasenbereich sowie dem Hinterkantenbereich.

Ausführungsgemäß kann auch vorgesehen sein, dass wenigstens einer der ersten, zweiten oder dritten Aufnahmebereiche des zu bauenden Rotorblatts eine Längserstreckung aufweisen, welche im Wesentlichen parallel zur Längserstreckung des zu bauenden Rotorblatts orientiert ist. Die Längserstreckung des Rotorblattes erstreckt sich hierbei von dem Flansch des Rotorblattes zu der Blattspitze. Die ausführungsgemäße Verklebeeinrichtung weist zudem eine oder mehrere Aufnahmen auf, deren geometrische Erstreckung eine Ausdehnungsrichtung aufweist, die sich von den anderen dadurch unterscheidet, dass sie maximal groß ist. Dies soll im ausführungsgemäßen Sinne die Längserstreckungsrichtung der Aufnahme sein. Alternativ können die Aufnahmebereiche auch eine Längserstreckung aufweisen, welche senkrecht zu der Längserstreckungsrichtung des zu bauenden Rotorblatts bzw. in einem vorbestimmten Winkel dazu verlaufen.

Weiter kann im Sinne einer weiteren Ausführungsform vorgesehen sein, dass die Verklebeeinrichtung eine Verklebeapparatur aufweist, welche wenigstens abschnittsweise entlang der vorbestimmten Verklebebereiche, insbesondere senkrecht zu der Verlaufsrichtung des Erdmagnetfelds entlang der vorbestimmten Verklebebereiche verfahrbar ist. Die Verklebeapparatur ermöglicht den Auftrag des erforderlichen Klebers auf die Verklebebereiche vor dem Zusammenfügen der Rotorblattteile. Aufgrund der Größe der Rotorblatteile sowie der entsprechenden Verklebebereiche ist der Auftrag von großen Mengen von Kleber erforderlich, welcher ausführungsgemäß aus Gründen der Zeit- und Fertigungseffizienz mit Hilfe der Verklebeapparatur aufgetragen wird. Hierbei kann der Kleberauftrag durch menschliche Einwirkung unterstützt aufgetragen werden, oder aber vollständig automatisch.

Gemäß einer Weiterführung dieser Ausführungsform kann auch vorgesehen sein, dass die Verklebeapparatur geeignet ist, wenigstens eine Person aufzunehmen, die einen Kleberauftrag auf die vorbestimmten Verklebebereiche wenigstens eines der vorgefertigten Rotorblattteile vornehmen bzw. überwachen kann. Die wenigstens eine Person gewährleistet einen geeigneten Kleberauftrag auf die Verklebebereiche. Sie trägt entweder durch Handhabung einer geeigneten Vorrichtung den Kleber auf die erforderlichen Verklebebereiche auf oder aber überwacht nur den Kleberauftrag im Falle einer automatisch bzw. teilautomatisch betriebenen Vorrichtung. Insbesondere weist die Verklebeapparatur auch ausreichend Raum für die Lagerung des Klebers auf. Als Kleber kann ein industrieüblicher Kleber, insbesondere ein Epoxykleber verwendet werden.

Weiterhin kann die Verklebeapparatur auch in die Längserstreckungsrichtung des zu bauenden Rotorblatts verfahrbar sein. Damit wird insbesondere dann besonders effizient Kleber aufgebracht, wenn die Rotorblattteile eine Längserstreckungsrichtung aufweisen, welche im Wesentlichen der Längserstreckungsrichtung des herzustellenden Rotorblatts entspricht, also die Verklebebereiche ebenfalls in diese Längserstreckungsrichtung verlaufen.

Weiterhin kann die Verklebeapparatur sich auch dadurch auszeichnen, dass die Verklebeapparatur dafür geeignet ausgebildet ist, Kleber auf vorbestimmte Verklebebereiche wenigstens eines der vorgefertigten Rotorblattteile bzw. den Flansch automatisch aufzutragen. Ein solcher automatischer Auftrag kann etwa dadurch erfolgen, dass die Verklebebereiche eine geeignete Kennzeichnung aufweisen, welche von einer optischen Erkennung erfasst werden und entsprechend mit Kleber versorgt werden. Alternativ kann ein solcher automatischer Auftrag auch dadurch erfolgen, dass die Ausmaße und Ortspositionen der Verklebebereiche vorab erfasst und abgespeichert werden, und die Verklebeapparatur entsprechend diesen abgespeicherten Informationen einen ortsgenauen Kleberauftrag ermöglicht.

Entsprechend einer weiteren Ausführungsform der Verklebeeinrichtung kann auch vorgesehen sein, dass die Verklebeeinrichtung wenigstens eine Tempervorrichtung aufweist, welche derart ausgebildet ist, dass sie lokal begrenzt, vorbestimmte Verklebebereiche wenigstens eines der vorgefertigten Rotorblattteile bzw. des Flansches mit Wärme beaufschlagt. Eine solche Tempervorrichtung kann eine Widerstandheizung mit metallischen Widerstandsheizdrähten aufweisen. Diese können auch in vorbestimmte Bauteile, insbesondere in Einsätze der Aufnahmebereiche für die vorgefertigten Rotorblattteile einlaminiert sein. Derartige Widerstandsheizfelder können die Größe von 1 - 2 m² aufweisen, die einzeln bzw. separat ansteuerbar sind. Zur Temperaturregelung sind zudem noch Temperaturmessfühler vorgesehen. Die Geometrie der Tempervorrichtung entspricht hierbei im Wesentlichen dem Verlauf der Verklebebereiche, wobei andere vorgefertigte und bereits gehärtete Bereiche der Rotorblattteile nicht mit Wärmeenergie versorgt wird. Dies spart vor allem im Vergleich zu solchen Verklebeeinrichtungen merkbar Energie, da nicht das gesamte herzustellende Rotorblatt mit Wärmeenergie versorgen wird.

Weiter kann die Verklebevorrichtung auch noch mindestens eine Andrückeinheit aufweisen, welche derart ausgebildet ist, dass sie ein oder mehrere Gurtenden der vorgefertigten Rotorblattteile zum Verkleben an den Flansch andrücken kann. Eine solche Anrückeinheit ermöglicht vor allem eine gezielte Verbindung von Rotorblattteil und Flansch. Das Rotorblattteil weist etwa ausführungsgemäß Gurte auf, welche nach abschließender Fertigstellung des Rotorblatt im Inneren angeordnet sind. Alternativ kann aber auch jeder andere geeignete Bereich eines oder mehrerer Rotorblatteile an den Flansch angedrückt werden. Eine solche Andrückeinheit kann zudem auch eine Tempervorrichtung mit umfassen.

Überdies kann die Verklebevorrichtung auch noch mindestens eine Ansaugeinheit aufweisen, welche erlaubt, wenigstens eines der Rotorblattteile mittels Unterdruck in dem jeweiligen Aufnahmebereich zu haltern. Hierzu kann die Verklebevorrichtung in den jeweiligen Aufnahmebereichen Ansaugstutzen aufweisen, welche mit wenigstens einer Saugpumpe zusammen wirken und zwischen dem vorgefertigten Rotorblattteil und dem Aufnahmebereich ein Vakuum ausbilden. Eine derartige Halterung hinterlässt auf der Oberfläche der Rotorblattteil keine Beschädigungen und eignet sich damit besonders gut für die Halterung.

Entsprechend einer weiteren Ausführungsform des erfindungsgemäßen Verfahrens zur Herstellung eines Rotorblatts kann auch vorgesehen sein, dass die Überführung der Rotorblattteile in die Verklebeposition weggesteuert erfolgt. Wie oben schon ausgeführt, ermöglicht dies eine zeitlich verbesserte und genauere Herstellung des Rotorblatts. Bevorzugt erfolgt die Wegsteuerung mit einer Genauigkeit von wenigstens 1 cm, insbesondere von 0,5 cm und bevorzugt von wenigstens 3 mm. Damit können die Verklebebereiche der Rotorblattteile mit ausreichender Genauigkeit zueinander positioniert werden, um die erforderliche Maßhaltigkeit des Rotorblatts gewährleisten zu können.

Entsprechend einer bevorzugten Ausführungsform des erfindungsgemäßen Rotorblatts ist vorgesehen, dass mindestens zwei Verklebebereiche wenigstens abschnittsweise in die Längserstreckungsrichtung des Rotorblatts verlaufen. Damit kann einerseits gewährleistet werden, dass die während des Betriebs einer Windkraftanlage auftretenden Belastungen geeignet über die Verklebebereiche verteilt werden, so dass keine Spannungsspitzen in den Verklebebereichen zu erwarten stehen. Anders würde es sich verhalten bei Rotorblättern deren Rotorblattteile derart verklebt werden, dass die Verklebebereiche im Wesentlichen senkrecht zur Längserstreckungsrichtung des Rotorblatts verlaufen. Hier können die verklebten Bereiche des Rotorblatts Schwachstellen hinsichtlich der mechanischen Belastbarkeit darstellen, wobei eine Beschädigung oder ein Rotorblattbruch im schlimmsten Fall bevorzugt an diesen Stellen auftreten.

Weiter kann ein Rotorblattteil eine Nasenschale umfassen. Der Nasenbereich eines Rotorblatts kann somit gesondert, und bevorzugt einstückig gefertigt werden, wobei die Verklebebereiche so ausgebildet sein können, dass eine weitgehend komplikationsfreie Verklebung erfolgt. Dies ist vor allem dann der Fall, wenn die Verklebebereiche weitgehend frei von Torsionen und/oder Hinterschnitten sind.

Ebenso kann ein Rotorblattteil ein Hinterkantensegment umfassen. Der Hinterkantenbereich kann somit gesondert, und bevorzugt abschnittsweise einstückig gefertigt werden, wobei die Verklebebereiche so ausgebildet sein können, dass eine komplikationsfreie Verklebung erfolgen kann. Dies ist vor allem dann der Fall, wenn die Verklebebereiche weitgehend frei von Torsionen und/oder Hinterschnitten sind.

Entsprechend einer Weiterführung des erfindungsgemäßen Rotorblatts kann auch vorgesehen sein, dass die Nasenschale und das Hinterkantensegment über ein Mittelteilsegment miteinander verbunden sind, welches sich im Wesentlichen in Längserstreckungsrichtung des Rotorblatts erstreckt. Eine solche Anordnung gewährleiste, dass das Mittelteilsegment die Kräfte aufnimmt und an den Flansch überträgt, welche durch die Nasenschale und das Hinterkantensegment eingeleitet werden. Die Verklebebereiche sind hierbei wiederum in Längserstreckungsrichtung des Rotorblattes gerichtet und können damit die beim Betrieb der Windkraftanlage auftretenden Spannungen geeignet über das Rotorblatt verteilen und in das Mittelteilsegment einleiten.

Die Erfindung sei beispielhaft an den nachfolgenden Figuren erläutert, wobei die Figuren die Allgemeinheit der Erfindung nicht einschränken sollen. Es werden für gleiche oder gleich wirkende Teile identische Bezugszeichen verwendet. Hierbei zeigen:
Fig. 1 eine perspektivische Ansicht einer Ausführungsform einer erfindungsgemäßen Verklebeeinrichtung, in welcher eine Ausführungsform eines erfindungsgemäßen Rotorblatts aufgenommen ist;
Fig. 2 eine perspektivische Seitenansicht der Ausführungsform einer erfindungsgemäßen Verklebeeinrichtung nach Fig. 1, in welcher kein Rotorblatt aufgenommen ist;
Fig. 3 eine perspektivische Aufsicht auf die Ausführungsform einer erfindungsgemäßen Verklebeeinrichtung gemäßen den vorhergehenden Figuren, in welcher kein Rotorblatt aufgenommen ist;
Fig. 4 eine perspektivische Ansicht des zweiten Aufnahmebereichs zur Aufnahme eines Mittelteilsegments einer Ausführungsform eines erfindungsgemäßen Rotorblatts entsprechend der in den vorhergehenden Figuren gezeigten Ausführungsform der Verklebeeinrichtung;
Fig. 5 eine perspektivische Ansicht einer Verklebeapparatur einer nicht weiter gezeigten Ausführungsform der in den vorhergehenden Figuren gezeigten Verklebeeinrichtung.

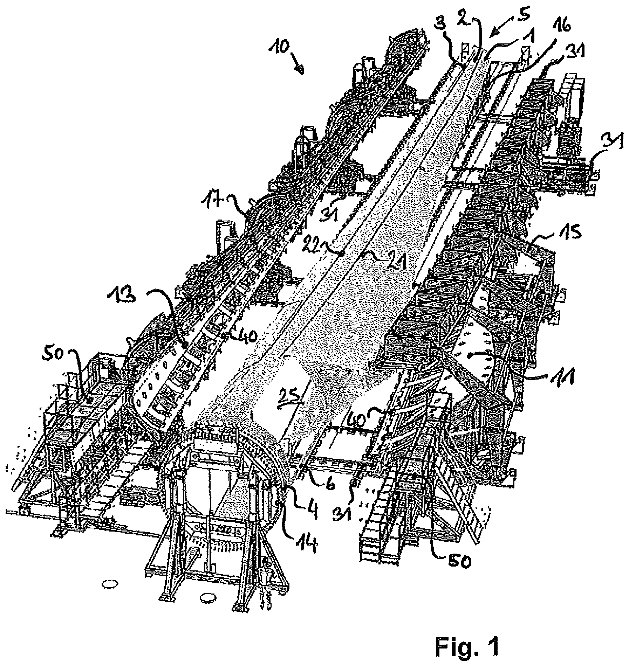

Fig. 1 zeigt eine perspektivische Ansicht einer Ausführungsform einer erfindungsgemäßen Verklebeeinrichtung 10, in welcher eine Ausführungsform eines erfindungsgemäßen Rotorblatts 5 aufgenommen ist. Das Rotorblatt 5 ist aus drei unterschiedlichen Rotorblattteilen 1, 2 und 3 aufgebaut. Hierbei ist der erste Rotorblattteil 1 als Nasenschale 1 ausgebildet, das zweite Rotorblattteil 2 als Mitteilteilsegment 2 und das dritte Rotorblattteil 3 als Hinterkantensegment 3. Die Verklebebereiche 21 zwischen der Nasenschale 1 und dem Mittelteilsegment 2 sind im Wesentlichen in der Längserstreckungsrichtung orientiert und sind sowohl auf der Saug- wie auf der Druckseite des Rotorblatts ausgebildet. Ebenso sind die Verklebebereiche 22 zwischen dem Hinterkantensegment 1 und dem Mittelteilsegment 2 im Wesentlichen in der Längserstreckungsrichtung orientiert und sowohl auf der Saug- wie auf der Druckseite des Rotorblatts ausgebildet. Sowohl die Nasenschale 1, als auch das Hinterkantensegment 3 sind jeweils durch einen Gurt 6, welcher jeweils im Inneren der Nasenschale 1, bzw. des Hinterkantensegments 3 verankert ist, mit dem Flansch 4 verbunden. Der Flansch 4 ist zudem in einem vierten Aufnahmebereich 14 angeordnet. Diese Anordnung des Flansches erfolgt durch ein Verschrauben einiger der an dem Flansch 4 vorgesehen Bolzen. Durch die Verschraubung wird der Flansch 4 räumlich fixiert, so dass eine Bewegung des Flansches 4 nur ungewollt und nach Aufwenden von großen mechanischen Kräften möglich wäre.

Weiter weist das Rotorblatt 5 in seinem dargestellten Fertigungszustand eine Öffnung 25 auf, welche einen Zugang zum Inneren des Rotorblatts 5 noch gewährleisten kann. Die Öffnung ist erforderlich, um die Gurte bzw. die Stege im Inneren des Rotorblatts 5 noch weiter zu verarbeiten. Nach erfolgter Verarbeitung wird die Öffnung 25 mit einem nicht weiter gezeigten Bauteil verschlossen, wobei die Außenhaut des Rotorblatts 5 an dem Flansch 4 allseitig angebracht ist. Das Verschließen der Öffnung 25 erfolgt, indem das Bauteil an den Begrenzungen, welche als Klebebereiche ausgebildet sind, mit einem Kleber mit dem Mittelteilsegment 2 und der Nasenschale 1 verklebt wird. Ein Aushärten durch Wärmeeinwirkung auf den Kleber kann zudem mit einer nicht weiter gezeigten Vorrichtung erfolgen.

Um das ausführungsgemäße Rotorblatt 5 herzustellen werden zunächst in die erste Aufnahme 11 der Verklebeeinrichtung 10 ein erstes vorgefertigtes Rotorblattteil 1 (Nasenschale) eingelegt und befestigt. Die Befestigung erfolgt mittels geeignet angebrachter Saugstutzen, welche eine Halterung mittels Unterdruck ermöglichen. Ebenso wird in der dritten Aufnahme 13 der Verklebeeinrichtung 10 ein drittes vorgefertigtes Rotorblattteil 1 (Nasenschale) eingelegt und befestigt. Die Befestigung erfolgt wiederum durch Halterung mittels Unterdruck.

Sowohl beim Einlegen des ersten vorgefertigten Rotorblattteils 1 als auch beim Einlegen des dritten vorgefertigten Rotorblattteils 1 wird darauf geachtet, dass eine vorbestimmte Ausrichtung als auch die notwendige Genauigkeit beim Einpassen eingehalten wird. Um die Passung zu unterstützen, weisen die Aufnahmen 11 und 13 Einsätze auf, welche der geometrischen Umfangsform der Rotorblatteile 1 und 3 entsprechen und so das passgenaue Einlegen unterstützen. Die Einsätze werden jeweils an einer ersten Haltestruktur 15 und einer dritten Haltestruktur 17 angebracht.

Die Haltestrukturen 15 und 17 sind jeweils auf einem Satz an Schienen 31 gegen den Erboden abgestützt und können darauf aufeinander zu bzw. voneinander weg bewegt werde.

Ungefähr mittig zwischen den beiden Haltestrukturen 15 und 17 ist eine weitere zweite Haltestruktur 16 angeordnet, auf welcher ebenfalls ein nicht weiter gezeigter bzw. sichtbarer zweiter Aufnahmebereich 12 vorgesehen ist. Der zweite Aufnahmebereich 12 dient der Aufnahme des zweiten vorgefertigten Rotorblattteils 2, welches als Mittelteilsegment 2 ausgeführt ist, das in dem gezeigten Rotorblatt 5 zwischen der Nasenschale 1 und dem Hinterkantensegment 3 angeordnet ist.

Zur Herstellung eines Rotorblatts 5 werden nun die erste Haltestruktur 15 mit dem in dem darin vorgesehenen ersten Aufnahmebereich 11 aufgenommenen ersten Rotorblattteil 1 (Nasenschale) und die dritte Haltestruktur 17 mit dem in dem darin vorgesehenen dritten Aufnahmebereich 13 aufgenommenen dritten Rotorblattteil 3 (Hinterkantensegment) relativ aufeinander zu bewegt, d.h. beide auf das in dem zweiten Aufnahmebereich 12 aufgenommenen zweiten Rotorblattteil 2 zu bewegt. Der zweiten Aufnahmebereich 12 sowie das darin aufgenommene zweite Rotorblattteil 2 bleiben also im Raum, wie der Flansch 4, unbewegt. Die Bewegung erfolgt solange bis die Verklebebereiche 21 der Nasenschale 1 und die Verklebebereiche 21 des Mittelteilsegments 2 ausreichend miteinander in Kontakt sind. Ein direkter und unmittelbarer Kontakt kann hierbei durch den auf die Verklebebereiche 21 aufgetragenen Kleber unterbunden werden. In jedem Fall ist jedoch die Annäherung beider Bauteile ausreichend nahe, um eine Verklebung mittels des Klebers herbeiführen zu können.

Ebenso erfolgt die Bewegung so, dass die Verklebebereiche 22 des Hinterkantensegments 3 und des Mittelteilsegments 2 ausreichend miteinander in Kontakt sind. Ein direkter und unmittelbarer Kontakt kann hierbei wiederum durch den auf die Verklebebereiche 22 aufgetragenen Kleber unterbunden werden. In jedem Fall ist jedoch die Annäherung beider Bauteile ausreichend nahe, um eine Verklebung herbeiführen zu können.

Die Bewegung der ersten Haltestruktur 15 und der dritten Haltestruktur 17 kann zeitgleich oder in einem zeitlichen Versatz erfolgen.

Ist die Verklebeposition erreicht, wird entlang der beiden Verklebebereiche 21 und 22 mittels den Tempervorrichtungen 40, welche jeweils in dem ersten Aufnahmebereich 11 und dem dritten Aufnahmebereich 13 vorgesehen sind, Wärmeenergie lokalisiert zugeführt. Die Tempervorrichtungen 40 sind hierbei so angeordnet und geometrisch ausgestaltet, dass im Wesentlichen nur die Verklebebereiche 21 und 22 mit Wärmeenergie versorgt werden. Dies führt zu einer gezielten Härtung des noch nicht gehärteten Klebers in den Verklebebereichen 21 und 22 und verbindet somit das erste Rotorblattteil 1 (Nasenschale), das zweite Rotorblattteil 2 (Mittelteilsegment) und das dritte Rotorblattteil 3 (Hinterkantensegment) miteinander fest.

Die Verbindung mit dem Flansch 4 erfolgt ebenso mit dem ersten Rotorblattteil 1 (Nasenschale), den zweiten Rotorblattteil 2 (Mittelteilsegment) und dem dritten Rotorblattteil 3 (Hinterkantensegment), wobei die Härtung des Klebers in den nicht weiter mit Bezugszeichen versehenen Verklebebereichen vorliegend mit einer nicht weiter gezeigten Tempervorrichtung erfolgt.

Die Verbindung der Gurtenden 6 auf der Seite des ersten Rotorblattteils 1 und des dritten Rotorblattteils 3 erfolgt ausführungsgemäß mit Hilfe jeweils seitlich angeordneter Andrückeinheiten 50, welche ebenso in Richtung auf den Flansch 4 auf Schienen bewegt werden können. Nach ausreichender Annäherung drücken vorgeformte Flächen gegen die Gurtenden 6, welche mit dem Flansch verklebt sind und bewirken demnach ein Andrücken der Gurtenden 6 gegen vorbestimmte Bereiche an dem Flansch 4. Eine Aushärtung kann durch Wärmeeinwirkung an diesen Bereichen erfolgen. Hierzu kann wiederum an oder in den Andrückbereichen eine Tempervorrichtung vorgesehen sein.

Die Bewegung sowohl der Andrückeinheiten 50 als auch die der ersten Haltestruktur 15 und der dritten Haltestruktur 17 können weggesteuert und einzeln angesteuert erfolgen.

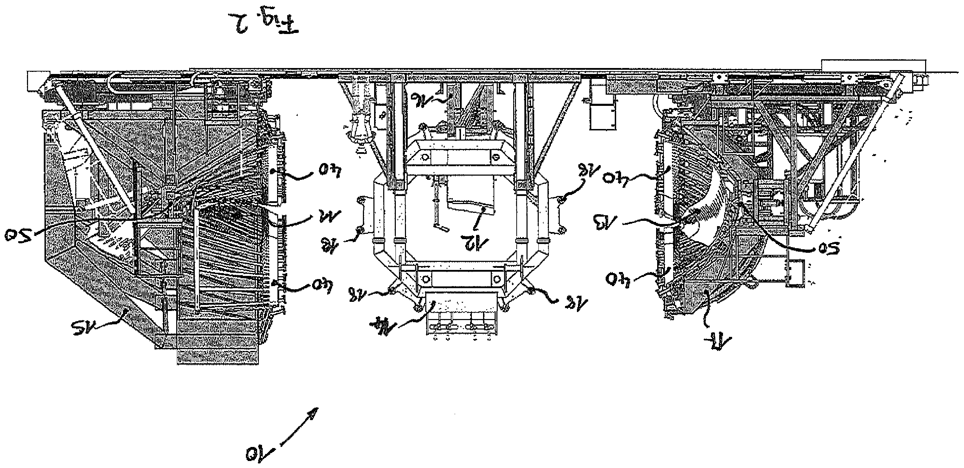

Fig. 2 zeigt eine perspektivische Seitenansicht der Ausführungsform einer erfindungsgemäßen Verklebeeinrichtung 10 nach Fig. 1, in welcher kein Rotorblatt aufgenommen ist. Deutlich ist der vierte Aufnahmebereich 14 dargestellt, welcher zur Halterung des Flansches 4 vorgesehen ist. Der Flansch 4 wird hierbei mittels einiger Bolzen des Bolzenkranzes gehaltert, welche durch Bolzenaufnahmen 18 aufgenommen werden. Ausführungsgemäß sind die Bolzenaufnahmen 18 als Durchführungen 18 ausgebildet, durch welche die Bolzen geführt und auf der gegenüber liegenden Seite verschraubt werden.

Ebenfalls deutlich erkennbar ist der zweite Aufnahmebereich 12, welcher selbst auf der zweiten Haltestruktur 16 angebracht ist (der zweite Aufnahmebereich 12 sowie die zweite Haltestruktur 16, welche beide in der Bildebene hinter dem vierten Aufnahmebereich 14 angeordnet sind, sind perspektivisch gezeichnet).

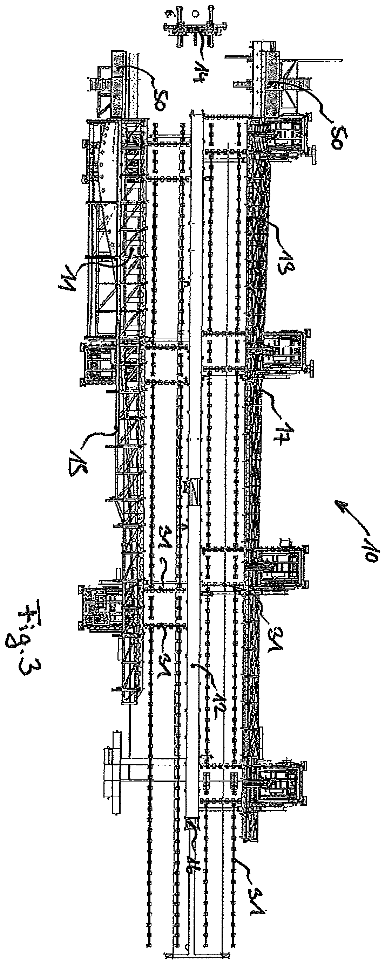

Fig. 3 zeigt eine perspektivische Aufsicht auf die Ausführungsform einer erfindungsgemäßen Verklebeeinrichtung 10 gemäßen den vorhergehenden Figuren, in welcher kein Rotorblatt 5 aufgenommen ist. Deutlich erkennbar ist in der Darstellung die erste Haltestruktur 15, welche einen ersten Aufnahmebereich 11 zur Aufnahme eines nicht gezeigten ersten Rotorblattteils 1 (Nasenschale) aufweist. Weiter ist die dritte Haltestruktur 17 erkennbar, welche einen dritten Aufnahmebereich 13 zur Aufnahme eines nicht gezeigten dritten Rotorblattteils 3 (Hinterkantensegment) aufweist. Beide Haltestrukturen 15 und 17 sind jeweils auf einer Seite des zweiten Aufnahmebereichs 12 angeordnet, welcher auf einer zweiten Haltestruktur 16 angebracht ist.

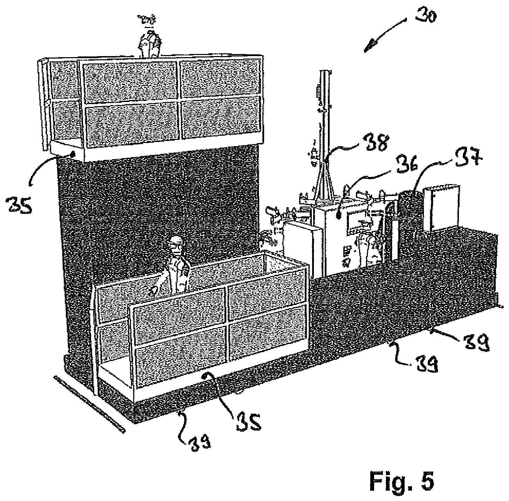

Weiterhin verläuft sowohl auf der Seite der ersten Haltestruktur 15 als auch auf der Seite der dritten Haltestruktur 17 ein Paar an parallel zueinander angeordneten Schienen 31, welche für jeweils eine Verklebeapparatur 30 vorgesehen sind (siehe auch Fig. 5). Derartige Verklebeapparaturen können entlang dieser Schienen 31 verschoben werden, so dass alle Verklebebereiche 21 und 22 der nicht weiter gezeigten Rotorblattteile 1, 2 und 3 mit Kleber versorgt und versehen werden können. Hierbei verlaufen die Schienen 31 im Wesentlichen parallel zu der Längserstreckung des zweiten Aufnahmebereichs 12.

Weiter zeigt Fig. 3 auf der Seite der ersten Haltestruktur 15 einen Satz aus drei Paaren von parallel verlaufenden Schienen 31. Diese dienen der ersten Haltestruktur 15 zur Bewegung in Richtung auf den zweiten Aufnahmebereich 12 zu. Zudem ist auf der Seite der dritten Haltestruktur 17 ein Satz aus vier Paaren von parallel verlaufenden Schienen 31 angeordnet. Diese dienen der dritten Haltestruktur 17 ebenfalls zur Bewegung in Richtung auf den zweiten Aufnahmebereich 12 zu. Diese Schienenpaare sind in ihrem Verlauf im Wesentlichen senkrecht zu den Schienen 31 angeordnet, welche für die Verklebeapparatur vorgesehen sind.

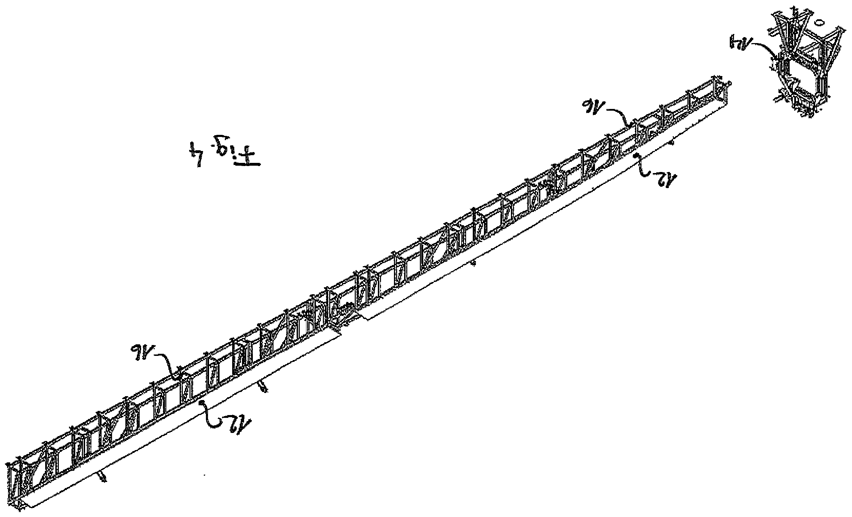

Fig. 4 zeigt eine perspektivische Ansicht des zweiten Aufnahmebereichs 12 zur Aufnahme eines Mittelteilsegments einer Ausführungsform eines erfindungsgemäßen Rotorblatts 5 (nicht gezeigt) entsprechend der in den vorhergehenden Figuren gezeigten Ausführungsform der Verklebeeinrichtung 10. Der zweite Aufnahmebereich 12 ist hierbei zweigeteilt und wird von einer zweiten Haltestruktur 16 getragen. Endständig ist in Verlängerung der Längsausdehnungsrichtung des zweiten Aufnahmebereichs 12 der vierte Aufnahmebereich 14 für die Halterung des Flansches 4 vorgesehen.

Der zweite Aufnahmebereich 12 ist etwa in der Mitte seiner Längsausdehnung unterbrochen und weist eine Aussparung auf. Diese Aussparung kann für die Justierung vorteilhaft sein, wenn sie etwa Justierhilfen aufweist, welche vorliegend nicht gezeigt sind.

Fig. 5 zeigt eine perspektivische Ansicht einer Verklebeapparatur 30 einer nicht weiter gezeigten Ausführungsform der in den vorhergehenden Figuren gezeigten Verklebeeinrichtung 10. Die Verklebeeinrichtung 10 ist geeignet, mehrere Personen aufzunehmen (vorliegend drei Personen), welche auf jeweils unterschiedlichen Ebenen arbeiten können. Die Verklebeapparatur 30 weist zwei Personenbühnen 35 auf, welche in der Höhe (entsprechend der gezeigten Orientierung) verfahren werden können. Die Personen können etwa mit Schläuchen (vorliegend nicht gezeigt) ausgestattet sein, welche zum Auftrag und zur Dosierung von Kleber (beispielsweise handelsüblicher Epoxykleber) geeignet sind. Die Schläuche können hierzu auch geeignete Austrittsdüsen aufweisen, aus welchen der Kleber ausgegeben wird.

Die Schläuche münden auf der anderen Schlauchseite in eine Ausgabeeinheit 36, welche mit einer geeigneten Steuerung versehen ist. Die Ausgabeeinheit 36 wirkt mit einer Pumpe (nicht gezeigt) zusammen, welche den bereit gestellten Kleber an die Schläuche verteilt. Von der Ausgabeeinheit 36 gehen die Schläuche jeweils nach oben (entsprechend der vorliegenden Orientierung) ab und werden zur Zugentlastung an einer Schlauchhalterung 38 gehaltert. Der Kleber wird aus dem Vorratsbehälter 37 entnommen.

Zur Fortbewegung ist der Verklebeappratur 30 mittels Schienenrollen 39 gegen nicht weiter gezeigte Schienen 31 abgestützt und kann auf diesen etwa autonom durch eine geeignete Antriebseinrichtung (nicht gezeigt) bewegt werden.

Weiter Ausführungsformen ergeben sich aus den Unteransprüchen. Zudem soll darauf hingewiesen werden, dass alle in den Figuren gezeigten Merkmale für sich alleine als auch in Verbindung miteinander vorliegend beansprucht werden.

### Bezugszeichen:

- 1: Erstes Rotorblattteil
- 2: Zweites Rotorblattteil
- 3: Drittes Rotorblattteil

- 4: Flansch
- 5: Rotorblatt
- 6: Gurtende

- 10: Verklebeeinrichtung
- 11: erster Aufnahmebereich
- 12: zweiter Aufnahmebereich
- 13: dritter Aufnahmebereich
- 14: vierter Aufnahmebereich
- 15: erste Haltestruktur
- 16: zweite Haltestruktur
- 17: dritte Haltestruktur
- 18: Bolzenaufnahmen

- 21: Verklebebereich
- 22: Verklebebereich
- 25: Öffnung

- 30: Verklebeapparatur
- 31: Schienen
- 35: Personenbühne
- 36: Ausgabeeinheit
- 37: Vorratsbehälter
- 38: Schlauchhalterung
- 39: Schienenrollen

- 40: Tempervorrichtung
- 50: Andrückeinheit

- 60: Ansaugeinheit

## Patentansprüche

1. Verklebeeinrichtung (10) zum Bau von segmentierten, mindestens drei vorgefertigte Rotorblattteile, nämlich Nasenschale (1), Mittelteilsegment (2) und Hinterkantensegment (3), umfassenden Rotorblättern (5), aufweisend:
einen ersten Aufnahmebereich (11) für die Aufnahme der vorgefertigten Nasenschale (1), einen zweiten Aufnahmebereich (12) für die Aufnahme des vorgefertigten Mittelteilsegments (2) und einen dritten Aufnahmebereich (13) für die Aufnahme des vorgefertigten Hinterkantensegments (3), wobei der erste Aufnahmebereich (11), der zweite Aufnahmebereich (12) und der dritte Aufnahmebereich (13) so relativ zueinander bewegt werden können, dass nach erfolgter Aufnahme der drei vorgefertigten Rotorblattteile (1, 2, 3) in den bestimmungsgemäßen Aufnahmebereichen (11, 12, 13) in einer Offen-Position der Verklebeeinrichtung (10) diese Rotorblattteile (1, 2, 3) über vorbestimmte Verklebebereiche (21, 22) miteinander in direkten oder indirekten Kontakt gebracht und damit in eine Verklebeposition überführt werden können, wobei zwischen einer ersten Haltestruktur (15) für den ersten Aufnahmebereich (11) und einer dritten Haltestruktur (17) für den dritten Aufnahmebereich (13) eine zweite Haltestruktur (16) für den zweiten Aufnahmebereich (12) vorgesehen ist, **dadurch gekennzeichnet, dass** die erste Haltestruktur (15) mit dem ersten Aufnahmebereich (11) und der Nasenschale (1) sowie die dritte Haltestruktur (17) mit dem dritten Aufnahmebereich (13) und dem Hinterkantensegment (3) auf das im zweiten Aufnahmebereich (12) aufgenommene Mittelteilsegment (2) zu bewegbar sind, während der zweite Aufnahmebereich (12) mit dem Mittelteilsegment (2) im Raum unbewegt bleibt.

2. Verklebeeinrichtung nach Anspruch 1, **dadurch gekennzeichnet, dass** die Verklebeeinrichtung (10) wenigstens einen weiteren vierten Aufnahmebereich (14) aufweist, welcher zur Aufnahme bzw. zur Halterung eines Flansches (4) ausgebildet ist, der insbesondere mit mindestens einem der drei vorgefertigten Rotorblattteilen (1, 2, 3) über einen vorbestimmten Verklebebereich (23, 24) verklebt werden kann.

3. Verklebeeinrichtung nach einem der vorhergehenden Ansprüche, **dadurch gekennzeichnet, dass** wenigstens einer der vier Aufnahmebereiche (11, 12, 13, 14) bei der Überführung der in den Aufnahmebereichen angeordneten, vorgefertigten Rotorblattteile in die Verklebeposition relativ zu einem der anderen Aufnahmebereiche (11, 12, 13, 14) verkippt werden kann.

4. Verklebeeinrichtung nach einem der vorhergehenden Ansprüche, **dadurch gekennzeichnet, dass** der erste Aufnahmebereich (11), der zweite Aufnahmebereich (12) und der dritte Aufnahmebereich (13) bei der Überführung der in den drei Aufnahmebereichen (11, 12, 13) angeordneten, vorgefertigten Rotorblattteilen (1, 2, 3) in die Verklebeposition eine in Bezug zum Verlauf des Erdbeschleunigungsfeldes senkrechte Bewegung relativ zueinander ausführen.

5. Verklebeeinrichtung nach einem der vorhergehenden Ansprüche, **dadurch gekennzeichnet, dass** wenigstens einer der drei Aufnahmebereiche (11, 12, 13) schwenkbar, insbesondere um wenigstens 90° schwenkbar ausgeführt ist.

6. Verklebeeinrichtung nach einem der vorhergehenden Ansprüche, **dadurch gekennzeichnet, dass** wenigstens einer der Aufnahmebereiche (11, 12, 13, 14) an eine geometrische Form des bestimmungsgemäß zur Aufnahme vorgesehenen, vorgefertigten Rotorblattteils (1, 2, 3) bzw. Flansches (4) anpassbar ist.

7. Verklebeeinrichtung nach einem der vorhergehenden Ansprüche, **dadurch gekennzeichnet, dass** wenigstens einer der ersten, zweiten oder dritten Aufnahmebereiche (11, 12, 13) der Verklebeeinrichtung (10) eine Längserstreckung aufweisen, welche im Wesentlichen parallel zur Längserstreckung des zu bauenden Rotorblatts (5) orientiert ist.

8. Verklebeeinrichtung nach einem der vorhergehenden Ansprüche, **dadurch gekennzeichnet, dass** die Verklebeeinrichtung eine Verklebeapparatur (30) aufweist, welche wenigstens abschnittsweise entlang der vorbestimmten Verklebebereiche (21, 22, 23, 24) verfahrbar ist.

9. Verklebeeinrichtung nach einem der vorhergehenden Ansprüche, **dadurch gekennzeichnet, dass** die Verklebeeinrichtung (10) wenigstens eine Tempervorrichtung (40) aufweist, welche derart ausgebildet ist, dass sie lokal begrenzt, vorbestimmte Verklebebereiche (21, 22, 23, 24) wenigstens eines der vorgefertigten Rotorblattteile (1, 2, 3) bzw. des Flansches (4) mit Wärme beaufschlagt.

10. Verklebeeinrichtung nach einem der vorhergehenden Ansprüche 2 bis 9, **dadurch gekennzeichnet, dass** die Verklebeeinrichtung (10) mindestens eine Andrückeinheit (50) aufweist, welche derart ausgebildet ist, dass sie ein oder mehrere Gurtenden (6) der vorgefertigten Rotorblattteile (1, 2, 3) zum Verkleben an den Flansch (4) andrücken kann.

11. Verklebeeinrichtung nach einem der vorhergehenden Ansprüche, **dadurch gekennzeichnet, dass** die Verklebeeinrichtung (10) mindestens eine Ansaugeinheit (60) aufweist, welche erlaubt, wenigstens eines der Rotorblattteile (1, 2, 3) mittels Unterdruck in dem jeweiligen Aufnahmebereich zu haltern.

12. Verfahren zum Verkleben von mindestens drei vorgefertigten Rotorblattteilen, nämlich Nasenschale (1), Mittelteilsegment (2) und Hinterkantensegment (3), zum Bau eines segmentierten Rotorblattes, wobei die Rotorblatteile (1, 2, 3) mit Hilfe einer Verklebeeinrichtung (10) derart verklebt werden, dass alle drei Rotorblattteile von der Verklebeeinrichtung (10) aufgenommen und über vorbestimmte Verklebebereiche mit einem anderen Rotorblattteil (1, 2, 3) in direkten oder indirekten Kontakt zum Verkleben in eine Verklebeposition überführt werden, **dadurch gekennzeichnet, dass** eine erste Haltestruktur (15) mit einem ersten Aufnahmebereich (11) und der Nasenschale (1) sowie eine dritte Haltestruktur (17) mit einem dritten Aufnahmebereich (13) und dem Hinterkantensegment (3) auf das Mittelteilsegment (2) zu bewegt werden, während ein zweiter Aufnahmebereich (12) mit dem Mittelteilsegment (2) im Raum unbewegt bleibt.

## Claims

1. An adhesive device (10) for constructing segmented rotor blades (5) comprising at least three prefabricated rotor blade parts, namely nose shell (1), middle part segment (2), and rear edge segment (3), exhibiting:
a first accommodating region (11) for receiving the prefabricated nose shell (1), a second accommodating region (12) for receiving the prefabricated middle part segment (2) and a third accommodating region (13) for receiving the prefabricated rear edge segment (3), wherein the first accommodating region (11), the second accommodating region (12) and the third accommodating region (13) can be moved relative to each other such that, after the three prefabricated rotor blade parts (1, 2, 3) have been accommodated in the intended accommodating regions (11, 12, 13) in an open position of the adhesive device (10), these rotor blade parts (1, 2, 3) can be brought into direct or indirect contact with each other via predetermined adhesion regions (21, 22) and thus transferred to an adhesion position, wherein a second retaining structure (16) for the second accommodating region (12) is provided between a first retaining structure (15) for the first accommodating region (11) and a third retaining structure (17) for the third accommodating region (13), **characterized in that** the first retaining structure (15) with the first accommodating region (11) and the nose shell (1) as well as the third retaining structure (17) with the third accommodating region (13) and the rear edge segment (3) can be moved toward the middle part segment (2) received in the second accommodating region (12), while the second accommodating region (12) with the middle part segment (2) remains spatially fixed in place.

2. The adhesive device according to claim 1, **characterized in that** the adhesive device (10) exhibits at least one additional, fourth accommodating region (14), which is designed to receive or mount a flange (4), which in particular can be adhesively bonded with at least one of the three prefabricated rotor blade parts (1, 2, 3) over a predetermined adhesion region (23, 24).

3. The adhesive device according to any one of the preceding claims, **characterized in that** at least one of the four accommodating regions (11, 12, 13, 14) can be tilted relative to one of the other accommodating regions (11, 12, 13, 14) while transferring the prefabricated rotor blade parts situated in the accommodating regions into the adhesion position.

4. The adhesive device according to any one of the preceding claims, **characterized in that** the first accommodating region (11), the second accommodating region (12) and the third accommodating region (13) execute a movement relative to each other that is perpendicular to the progression of the gravitational field while transferring the prefabricated rotor blade parts (1, 2, 3) situated in the three accommodating regions (11, 12, 13) into the adhesion position.

5. The adhesive device according to any one of the preceding claims, **characterized in that** at least one of the three accommodating regions (11, 12, 13) is pivotable in design, in particular so that it can pivot by at least 90°.

6. The adhesive device according to any one of the preceding claims, **characterized in that** at least one of the accommodating regions (11, 12, 13, 14) can be adjusted to a geometric shape of the prefabricated rotor blade part (1, 2, 3) or flange (4) provided as intended for accommodation.

7. The adhesive device according to any one of the preceding claims, **characterized in that** at least one of the first, second or third accommodating regions (11, 12, 13) of the adhesive device (10) exhibits a longitudinal extension, which is essentially oriented parallel to the longitudinal extension of the rotor blade (5) to be constructed.

8. The adhesive device according to any one of the preceding claims, **characterized in that** the adhesive device exhibits an adhesive apparatus (30), which can at least sectionally move along the predetermined adhesion regions (21, 22, 23, 24).

9. The adhesive device according to any one of the preceding claims, **characterized in that** the adhesive device (10) exhibits at least one tempering device (40), which is designed in such a way as to expose predetermined adhesion regions (21, 22, 23, 24) of at least one of the prefabricated rotor blade parts (1, 2, 3) or the flange (4) to heat on a locally limited basis.

10. The adhesive device according to any one of the preceding claims 2 to 9, **characterized in that** the adhesive device (10) exhibits at least one pressing unit (50), which is designed in such a way as to be able to press one or more belt ends (6) of the prefabricated rotor blade parts (1, 2, 3) against the flange (4) for purposes of adhesive bonding.

11. The adhesive device according to any one of the preceding claims, **characterized in that** the adhesive device (10) exhibits at least one suction unit (60), which makes it possible to retain at least one of the rotor blade parts (1, 2, 3) in the respective accommodating region under a vacuum.

12. A method for adhesively bonding at least three prefabricated rotor blade parts (1, 2, 3), namely nose shell (1), middle part segment (2), and rear edge segment (3), for constructing a segmented rotor blade (5), wherein the rotor blade parts (1, 2, 3) are adhesively bonded by means of an adhesive device (10) such that all three rotor blade parts are accommodated by the adhesive device (10) and transferred with another rotor blade part (1, 2, 3) to an adhesion position in direct or indirect contact via predetermined adhesion regions for purposes of adhesive bonding, **characterized in that** a first retaining structure (15) with a first accommodating region (11) and the nose shell (1) as well as a third retaining structure (17) with a third accommodating region (13) and the rear edge segment (3) are moved toward the middle part segment (2), while a second accommodating region (12) with the middle part segment (2) remains spatially fixed in place.

## Revendications

1. Dispositif de collage (10) pour la construction de pales de rotor segmentées (5) comprenant au moins trois parties de pale de rotor préfabriquées, à savoir une coque de bec (1), un segment de partie intermédiaire (2) et un segment de bord arrière (3), présentant:
une première zone de réception (11) pour la réception de la coque de bec préfabriquée (1), une deuxième zone de réception (12) pour la réception du segment de partie intermédiaire préfabriqué (2) et une troisième zone de réception (13) pour la réception du segment de bord arrière préfabriqué (3), dans lequel la première zone de réception (11), la deuxième zone de réception (12) et la troisième zone de réception (13) peuvent être déplacées l'une par rapport à l'autre, de telle manière qu'après la mise en place des trois parties de pale de rotor préfabriquées (1, 2, 3) dans les zones de réception adéquates (11, 12, 13) dans une position ouverte du dispositif de collage (10), ces parties de pale de rotor (1, 2, 3) puissent être mises en contact direct ou indirect l'une avec l'autre par des zones de collage prédéterminées (21, 22) et puissent ainsi être amenées dans une position de collage, dans lequel il est prévu entre une première structure de maintien (15) pour la première zone de réception (11) et une troisième structure de maintien (17) pour la troisième zone de réception (13) une deuxième structure de maintien (16) pour la deuxième zone de maintien (12), **caractérisé en ce que** la première structure de maintien (11) avec la première zone de réception (11) et la coque de bec (1) ainsi que la troisième structure de maintien (17) avec la troisième zone de réception (13) et le segment de bord arrière (3) peuvent être déplacées vers le segment de partie intermédiaire (2) placé dans la deuxième zone de réception (12) tandis que la deuxième zone de réception (12) avec le segment de partie intermédiaire (2) reste immobile dans l'espace.

2. Dispositif de collage selon la revendication 1, **caractérisé en ce que** le dispositif de collage (10) présente au moins une autre quatrième zone de réception (14), qui est configurée pour recevoir ou supporter une bride (4), qui peut être collée en particulier à au moins une des trois parties de pale de rotor préfabriquées (1, 2, 3) au moyen d'une zone de collage prédéterminée (23, 24).

3. Dispositif de collage selon l'une quelconque des revendications précédentes, **caractérisé en ce qu'**au moins une des quatre zones de réception (11, 12, 13, 14) peut être inclinée par rapport à une des autres zones de réception (11, 12, 13, 14) lors de l'amenée des parties de pale de rotor préfabriquées disposées dans les zones de réception dans la position de collage.

4. Dispositif de collage selon l'une quelconque des revendications précédentes, **caractérisé en ce que** la première zone de réception (11), la deuxième zone de réception (12) et la troisième zone de réception (13) exécutent l'une par rapport à l'autre un mouvement vertical par rapport à l'allure du champ d'accélération terrestre lors de l'amenée des parties de pale de rotor (1, 2, 3) préfabriquées, disposées dans les trois zones de réception (11, 12, 13), dans la position de collage.

5. Dispositif de collage selon l'une quelconque des revendications précédentes, **caractérisé en ce qu'**au moins une des trois zones de réception (11, 12, 13) est réalisée sous forme pivotante, en particulier sous forme pivotante sur au moins 90°.

6. Dispositif de collage selon l'une quelconque des revendications précédentes, **caractérisé en ce qu'**au moins une des zones de réception (11, 12, 13, 14) peut être adaptée à une forme géométrique de la partie de pale de rotor (1, 2, 3) ou de la bride préfabriquée prévue de manière adéquate pour la réception.

7. Dispositif de collage selon l'une quelconque des revendications précédentes, **caractérisé en ce qu'**au moins une de la première, de la deuxième ou de la troisième zone de réception (11, 12, 13) du dispositif de collage (10) présente une extension longitudinale, qui est orientée essentiellement parallèlement à l'extension longitudinale de la pale de rotor à construire (5).

8. Dispositif de collage selon l'une quelconque des revendications précédentes, **caractérisé en ce que** le dispositif de collage présente un appareillage de collage (30), qui est déplaçable au moins en partie le long des zones de collage prédéterminées (21, 22, 23, 24).

9. Dispositif de collage selon l'une quelconque des revendications précédentes, **caractérisé en ce que** le dispositif de collage (10) présente au moins un dispositif d'égalisation de la température (40), qui est configuré de telle manière qu'il envoie de la chaleur à des zones de collage prédéterminées localement limitées (21, 22, 23, 24) d'au moins une des parties de pale de rotor préfabriquées (1, 2, 3) ou de la bride (4).

10. Dispositif de collage selon l'une quelconque des revendications précédentes 2 à 9, **caractérisé en ce que** le dispositif de collage (10) présente au moins une unité de pression (50), qui est configurée de telle manière qu'elle puisse presser une ou plusieurs extrémité(s) de ceinture (6) des parties de pale de rotor préfabriquées (1, 2, 3) pour le collage à la bride (4).

11. Dispositif de collage selon l'une quelconque des revendications précédentes, **caractérisé en ce que** le dispositif de collage (10) présente au moins une unité d'aspiration (60), qui permet de soutenir au moins une des parties de pale de rotor (1, 2, 3) au moyen d'une dépression dans la zone de réception respective.

12. Procédé de collage d'au moins trois parties de pale de rotor préfabriquées, à savoir une coque de bec (1), un segment de partie intermédiaire (2) et un segment de bord arrière (3), pour la construction d'une pale de rotor segmentée, dans lequel on colle les parties de pale de rotor (1, 2, 3) à l'aide d'un dispositif de collage (10), de telle manière que les trois parties de pale de rotor soient toutes reçues dans le dispositif de collage (10) et soient amenées par des zones de collage prédéterminées avec une autre partie de pale de rotor (1, 2, 3) en contact direct ou indirect pour le collage dans une position de collage, **caractérisé en ce que** l'on déplace une première structure de maintien (15) avec une première zone de réception (11) et la coque de bec (1) ainsi qu'une troisième structure de maintien (17) avec une troisième zone de réception (13) et le segment de bord arrière (3) vers le segment de partie intermédiaire (2), tandis qu'une deuxième zone de réception (12) avec le segment de partie intermédiaire (2) reste immobile dans l'espace.
